# EUROPÄISCHE PATENTSCHRIFT

(11) **EP 1 116 161 B1**
(45) Veröffentlichungstag und Bekanntmachung des Hinweises auf die Patenterteilung: **26.03.2003**
(21) Anmeldenummer: 99955814.1
(22) Anmeldetag: 25.09.1999
(51) Int. Cl.: G06K 7/00, G06K 19/07

(54) **CHIPKARTE, SCHREIB-LESEGERÄT FÜR DIE CHIPKARTE UND VERFAHREN ZU DEREN BETRIEB**
CHIP CARD, WRITE/READ DEVICE FOR SAID CHIP CARD AND METHOD FOR OPERATING THE SAME
CARTE A PUCE, APPAREIL D'ECRITURE/DE LECTURE POUR LADITE CARTE A PUCE ET PROCEDE POUR LES ACTIONNER

(30) Priorität: 29.09.1998 DE 19844499
(43) Veröffentlichungstag der Anmeldung: 18.07.2001
(73) Patentinhaber: ROBERT BOSCH GMBH, 70442 Stuttgart (DE)
(72) Erfinder: WEBER, Klaus, D-90522 Oberasbach (DE)
(86) Internationale Anmeldenummer: DE9903099
(87) Internationale Veröffentlichungsnummer: WO00019352

(56) Entgegenhaltungen:
- EP-A- 0 727 759
- DE-C- 19 523 275
- US-A- 5 581 708
- US-A- 5 613 159

## Beschreibung

Die Erfindung betrifft eine Chipkarte nach dem Oberbegriff des Anspruchs 1, ein Schreib-Lesegerät zur Kommunikation mit einer solchen Chipkarte und ein Verfahren zu deren Betrieb.

### Stand der Technik

Eine Chipkarte nach dem Oberbegriff des Anspruchs 1 ist aus der Norm IS07816-3 bekannt. Chipkarten nach dieser Norm sind in der Lage, einen Resetbefehl von einem externen Schreib-Lesegerät zu empfangen, durch den sie insbesondere nach dem Einschalten eines Versorgungsstroms für die Chipkarte in einen definierten Anfangszustand gebracht werden. Eine solche Karte ist auch in der Lage, einen im laufenden Betrieb empfangenen Resetbefehl zu verarbeiten.

Eine wichtige Anwendung einer solchen Chipkarte ist die sogenannte "elektronische Geldbörse", die ein Benutzer an einem ersten Automaten, z. B. einer Bank, mit einem Geldbetrag aufladen kann, um dann anschließend Zahlungen durch Einführen der Karte in ein beim Empfänger der Zahlung aufgestelltes Schreib-Lesegerät und Abbuchen des zu zahlenden Betrags vom auf der Karte gespeicherten Guthaben auszuführen.

Die bekannte Karte verfügt über einen flüchtigen Speicher, der einen wohldefinierten Ausschaltzustand annimmt, wenn die Karte für eine ausreichend lange Zeit stromlos ist. Wenn die Karte unter Strom gesetzt wird, untersucht die Prozessoreinheit der Karte bei Empfang eines Resetbefehls den Zustand dieses flüchtigen Speichers. Wenn der Speicher im Ausschaltzustand ist, führt der Prozessor eine sogenannte Kaltstart-Initialisierung aus, in welcher die Karte vorbereitet wird, um in einem ersten Modus mit der Schreib-Leseschaltung zu kommunizieren. Im Laufe dieser Kaltstart-Initialisierung wird der Inhalt des flüchtigen Speichers verändert.

Wenn die Prozessoreinheit nach Empfang eines Resetbefehls feststellt, daß der flüchtige Speicher nicht im Ausschaltzustand ist, so erkennt sie daran, daß bereits eine Kaltstart-Initialisierung ausgeführt worden ist, und führt eine davon abweichende Initialisierung aus, die als Warmstart-Initialisierung bezeichnet wird und die Chipkarte in einen zweiten Kommunikationsmodus versetzt. Diese Eigenschaft der Chipkarte nach ISO7816-3 wird auch als "Double-Reset-Fähigkeit" bezeichnet.

Auf diese Weise ist es möglich, zwischen bestimmten Kommunikationsmodi der Karte umzuschalten, ohne daß die Parameter dieser Modi im einzelnen von einem Lesegerät an die Karte übertragen werden müssen. Dadurch kann beim Umschalten auf den zweiten Kommunikationsmodus Zeit gespart werden. Ein entsprechend schnelles Zurückschalten in den ersten Kommunikationsmodus ist allerdings mit einer Karte nach der Norm IS07816-3 nicht möglich. Die Norm schreibt vor, daß die Karte nach jedem erneuten Reset den gleichen Kommunikationsmodus einnehmen muß. Die Verwendung eines Resetbefehls zum Zurückschalten in den ersten Kommunikationsmodus bei laufender Karte ist deshalb ausgeschlossen.

Wenn die Stromversorgung der Karte zeitweilig unterbrochen wird, um auf diese Weise den flüchtigen Speicher zurück in seinen Ausschaltzustand zu versetzen, und anschließend eine Kaltstart-Initialisierung durchgeführt wird, tritt das Problem auf, daß Stromunterbrechungen von mehr als einer Sekunde notwendig sind, um sicherzustellen, daß alle kapazitiven Elemente der Karte entladen sind und der flüchtige Speicher seinen Ausschaltzustand wieder erreicht hat. Wenn der Versorgungsstrom der Karte vor diesem Zeitpunkt wieder eingeschaltet wird, ist der Zustand des flüchtigen Speichers nicht vorhersagbar, so daß der erste Kommunikationsmodus nicht mit Sicherheit hergestellt werden kann.

Die Double-Reset-Fähigkeit einer Chipkarte nach IS07816-3 ermöglicht ihre Anwendung in bargeldlosen elektronischen Zahlungssystemen, in denen es auf große Schnelligkeit der Transaktionen ankommt, so zum Beispiel bei einem automatischen Gebührenerfassungssystem zur Erhebung von Straßenbenutzungsgebühren für Kraftfahrzeuge. Eine Chipkarte zur Verwendung in einem solchen System muß an einem Bankautomaten unter Verwendung eines bestimmten Kommunikationsprotokolls mit Guthaben aufgeladen werden. Die Abbuchung von Straßenbenutzungsgebühren einer solchen Karte muß möglich sein, während das Fahrzeug ohne zu halten an einer Gebühreneinziehungsstation vorüberfährt. Die zur Etablierung eines Kommunikationsprotokolls zwischen der Gebühreneinziehungsstation und der Chipkarte und zum Abbuchen der Gebühr zur Verfügung stehende Zeit beträgt ca. 100 Millisekunden. Das zu verwendende Protokoll unterscheidet sich von dem am Bankautomaten verwendeten. Wenn die Karte beim Erreichen der Gebühreneinziehungsstation mit Strom versorgt wird und in einer Kaltstart-Initialisierung der zur Kommunikation mit dem Bankautomaten geeignete Kommunikationsmodus eingestellt wird, scheitert die Kommunikation mit der GebÜhreneinziehungsstation am verwendeten Protokoll. Dies muß erkannt werden, und die Karte muß einen Resetbefehl erhalten, um ein zur Kommunikation mit der Gebühreneinziehungsstation geeignetes Protokoll einzurichten, bevor die Gebühr abgebucht werden kann. Hierfür sind die zur Verfügung stehenden 100 Millisekunden nicht ausreichend. Wenn bei einer Kaltstart-Initialisierung der Karte zunächst der zur Kommunikation mit der Gebühreneinziehungsstation geeignete Kommunikationsmodus eingestellt wird, ist die Karte im Bankautomat trotzdem noch verwendbar, da der EMV-Standard vorsieht, daß ein Terminal einen Reset auslöst, wenn es die Karte nach einer Kaltstart-Initialisierung nicht erkannt hat. Auch die Abbuchung der Gebühren ist in den meisten Fällen möglich; es treten jedoch dann Fehler auf, wenn die Karte erst kurz vor Erreichen der Gebühreneinziehungsstation abgeschaltet worden ist und deshalb der flüchtige Speicher seinen Ausschaltzustand noch nicht sicher erreicht hat, wenn die Karte zum Abbuchen der Gebühr erneut mit Strom versorgt wird. In einem solchen Fall geht die Karte in den ungeeigneten Kommunikationsmodus über, und die Abbuchung der Gebühren scheitert.

US-A-5 581 708 offenbart eine IC-Karte, die zwei verschiedene Kommunikationsprotokolle unterstützt. Dazu verfügt die Karte über einen RAM-Speicher, in dem ein das zu verwendende Protokoll kennzeichnender Inhalt speicherbar ist. Wenn die Karte vom Lesegerät aktiviert wird, prüft sie den Inhalt des Speichers. Sofern sich dort ein bestimmter Inhalt befindet, wird ein Default-Protokoll aktiviert. Ein Umschalten vom ersten in ein zweites Protokoll mittels eines vom Lesegerät abgegebenen Umschaltsteuersignals ist ebenso möglich wie ein Zurückschalten vom zweiten in das erste (Default-) Protokoll.

Ähnliche Verfahren sind auch aus DE-C-195 23 275 und aus dem US-Patent 727 759 bekannt.

### Vorteile der Erfindung

Die erfindungsgemäße Chipkarte mit den Merkmalen des unabhängigen Patentanspruchs 1 ist in der Lage, nach einer Unterbrechung ihres Versorgungsstroms zuverlässig eine Kaltstart-Initialisierung auszuführen, ohne dass dafür eine Mindestdauer der Unterbrechung des Versorgungsstroms gewährleistet sein muss.

Des weiteren ist diese Chipkarte in der Lage, alle Anforderungen der Norm ISO 7816-3 zu erfüllen und dennoch nach Empfang eines Resetbefehls unterschiedliche, willkürlich wählbare Initialisierungsprozeduren auszuführen, die zu verschiedenen Betriebszuständen führen können.

Diese Vorteile werden gemäß einem ersten Aspekt der Erfindung erreicht mit einer Chipkarte gemäß Anspruch 1, deren Prozessoreinheit eingerichtet ist, um einen Befehl zum Versetzen des flüchtigen Speichers in den Ausschaltzustand von einem externen Gerät zu empfangen und auszuführen. Das Ausführen dieses Befehls, solange die Prozessoreinheit der Chipkarte noch mit Strom versorgt ist, erlaubt es, den Ausschaltzustand des flüchtigen Speichers in einer Zeitspanne herzustellen, die im wesentlichen durch die Reaktionsgeschwindigkeit der Prozessoreinheit bestimmt ist und im Bereich von Mikrosekunden liegen kann. Ein solcher vor dem Abschalten des Versorgungsstroms der Karte gegebener Befehl beeinflußt also das Verhalten der Karte nach dem Wiedereinschalten. Die unterschiedlichen Initialisierungsprozeduren der Karte führen vorzugsweise zur Einstellung unterschiedlicher Kommunikationsmodi. Dabei wird die größte Effektivierung der Kommunikation dann erzielt, wenn die Kaltstart-Initialisierung einen schnelleren Kommunikationsmodus einstellt als die Warmstart-Initialisierung. Auf diese Weise funktioniert eine Kommunikation im schnellen Modus, die in kurzer Zeit abgewickelt sein muß, vom Start der Karte an, wohingegen eine Kommunikation in langsamerem Modus, für die in der Regel mehr Zeit zur Verfügung steht, zwar zunächst daran scheitert, daß die Karte und das Gerät, mit dem sie kommunizieren soll, nicht zusammenpassende Kommunikationsmodi verwenden, aber daraufhin der korrekte Modus eingestellt wird (zum Beispiel per weiterem Reset).

Um die Vorteile der erfindungsgemäßen Chipkarte voll zu nutzen, wird ein Schreib-Lesegerät benötigt, das gemäß einem zweiten Aspekt der Erfindung in der Lage ist, den Befehl zum Versetzen des flüchtigen Speichers in den Ausschaltzustand an die Chipkarte zu senden, bevor es deren Versorgungsstrom ausschaltet. Dieses Gerät wird in Anspruch 4 definiert.

Ein solches Schreib-Lesegerät, das in einem Kraftfahrzeug montiert ist und eine Funkschnittstelle zum Austausch von Daten zwischen der Karte und einer ortsfesten Station umfaßt, ist zur Anwendung in einem automatischen Gebührenerfassungssystem geeignet.

Ein Verfahren gemäß einem dritten Aspekt der Erfindung zum Betreiben einer Chipkarte mit einem flüchtigen Speicher, der durch Unterbrechen der Stromversorgung in einen Ausschaltzustand versetzbar ist, umfaßt die in Anspruch 7 definierten Schritte.

Dabei kann der Resetbefehl mehr als einmal an die Karte gesendet werden, um zu erreichen, daß diese die Warmstart-Initialisierungsprozedur ausführt. Es kann auch nach dem Senden eines Befehls zum Versetzen des flüchtigen Speichers in den Ausschaltzustand direkt ein Resetbefehl an die Karte geschickt werden, ohne vorher den Versorgungsstrom auszuschalten, um so zu erreichen, daß die Karte die Kaltstart-Initialisierungsprozedur ausführt.

### Figuren

Weitere Vorteile und Merkmale der Erfindung ergeben sich aus der nachfolgenden Beschreibung eines Ausführungsbeispiels mit Bezug auf die Figuren. Es zeigen:
Figur 1 ein Schema eines automatischen Gebührenerfassungssystems mit einer Chipkarte und einem Schreib-Lesegerät gemäß der Erfindung;
und Figur 2 ein Flußdiagramm eines Verfahrens zum Betreiben der Chipkarte gemäß der Erfindung.

### Beschreibung des Ausführungsbeispiels

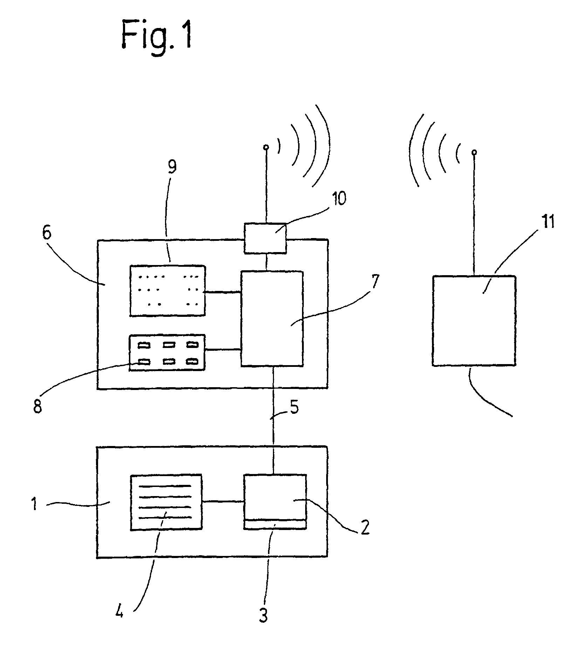

Figur 1 zeigt schematisch ein Chipkartensystem zur automatischen Gebührenerfassung mit einer Chipkarte 1 und einem Schreib-Lesegerät 6 gemäß der Erfindung. Die Chipkarte 1 enthält eine Prozessoreinheit 2 mit einem darin integrierten flüchtigen Speicher (RAM) 3 und einem elektrisch löschbaren Festwertspeicher (EEROM) 4. Das EEROM 4 dient zum Abspeichern von Verarbeitungswerten zwischen zwei Betätigungen der Karte; im vorliegenden Fall, in dem die Karte als elektronisches Zahlungsmittel verwendet wird, enthält das EEROM einen auf die Karte geladenen Geldbetrag. Der flüchtige Speicher 3 enthält Zwischenergebnisse von Verarbeitungen, die die Prozesäoreinheit 2 ausführt, und die nach Abschalten des Versorgungsstroms der Karte 1 nach einer Zeitspanne von ca. 1,5 Sekunden verlorengehen. Zu diesen Zwischenergebnissen gehört ein Flag, welches anzeigt, ob seit dem letzten Einschalten der Karte bereits ein Resetbefehl von der Prozessoreinheit 2 ausgeführt worden ist.

Die Chipkarte 1 ist in ein Schreib-Lesegerät eingeführt, und wird von deren Verarbeitungseinheit über eine Mehrzahl von Leitungen mit einer Betriebsspannung, einem Massepotential, einem Taktsignal und gegebenenfalls Resetbefehl versorgt. Eine fünfte Leitung dient zur seriellen Datenkommunikation zwischen der Chipkarte 1 und dem Schreib-Lesegerät 6. Die Verarbeitungseinheit 7 ist ferner mit einem Tastenfeld 8, einem Anzeigefeld 9 und einer Funkschnittsteile 10 verbunden. Über die Funkschnittstelle 10 kann das in einem Kraftfahrzeug mitgeführte Schreib-Lesegerät 6 mit einer an der Fahrbahn aufgestellten Funkbake 11 einer Gebühreneinziehungsstation kommunizieren, um Gebührenzahlungen abzuwickeln.

Ein Benutzer kann über das Tastenfeld 8 eine Mehrzahl von Befehlen in das Schreib-Lesegerät 6 eingeben, zum Beispiel kann er den aktuellen Kontostand der Chipkarte oder eine Aufstellung der letzten Transaktionen anfordern.

Wenn das Schreib-Lesegerät 6 über das Tastenfeld 8 einen Befehl erhält, der einen Datenaustausch mit der Chipkarte 1 erforderlich macht, oder wenn die Funkschnittstelle 10 die Annäherung an eine Funkbake 11 registriert, schaltet die Verarbeitungseinheit 7 den Versorgungsstrom der Chipkarte 1 ein und führt die Anschaltsequenz gemäß IS07816-3 durch.

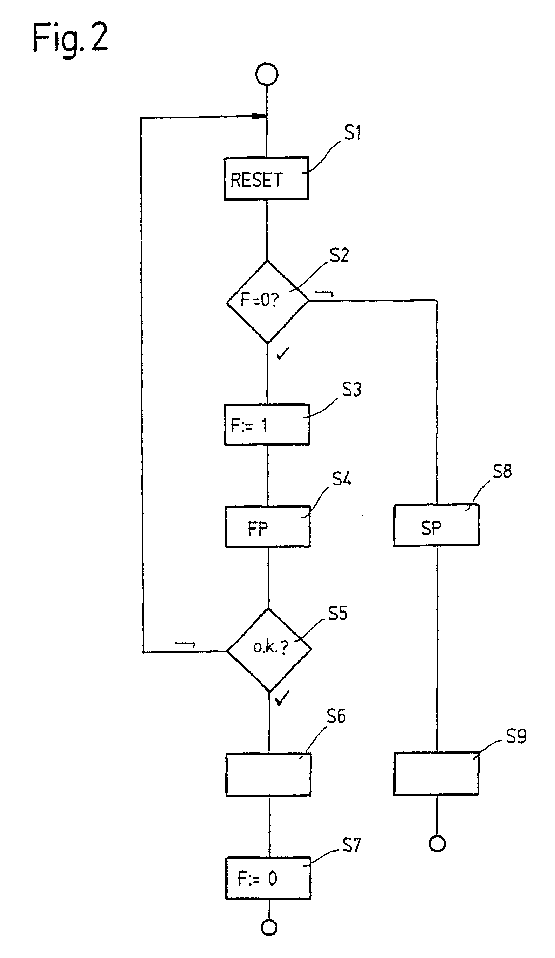

Das von der Chipkarte daraufhin ausgeführte Verfahren ist im Flußdiagramm der Figur 2 dargestellt.

Auf das Einschalten des Versorgungsstroms hin empfängt die Prozessoreinheit zunächst einen Resetbefehl von der Verarbeitungseinheit 7 in Schritt Sl. In Schritt S2 überprüft sie, ob das Flag, welches eine bereits durchgeführte Resetprozedur anzeigt, 0 oder 1 ist. Wenn das Flag 0 ist, nimmt die Prozessoreinheit an, daß seit dem letzten Einschalten des Versorgungsstroms noch kein Reset ausgeführt worden ist und verzweigt zu Schritt S3, in dem sie das Flag gleich 1 setzt. Anschließend initialisiert sie in Schritt S4 ein schnelles Kommunikationsprotokoll für den Datenaustausch mit der Verarbeitungseinheit 7. Eine Überprüfung in Schritt S5 ergibt, daß Prozessoreinheit 2 und Verarbeitungseinheit 7 das gleiche Protokoll verwenden und daß eine erfolgreiche Kommunikation möglich ist. Die Verarbeitungseinheit 7 startet daraufhin eine Transaktion, die sie in Schritt 56 zusammen mit der Prozessoreinheit ausführt. Bei dieser Transaktion kann es sich um die Weitergabe von Informationen aus dem EEROM 4 an die Verarbeitungseinheit 7 handeln, etwa über den Kontostand oder die letzten mit der Chipkarte ausgeführten Zahlungen, in Antwort auf eine entsprechende Anforderung des Benutzers über das Tastenfeld 8, oder um die Abbuchung eines Gebührenbetrags infolge der Kommunikation des Schreib-Lesegeräts 6 mit der Funkbake 11.

Nach Beendigung der Transaktion empfängt die Prozessoreinheit 2 in Schritt S7 einen Befehl von der Verarbeitungseinheit 7, das Flag auf 0 zurückzusetzen. Anschließend wird der Versorgungsstrom der Karte wieder ausgeschaltet. Das Flag befindet sich somit ab dem Moment des Ausschaltens des Versorgungsstroms in dem Zustand, in den es ohne einen entsprechenden Befehl erst nach Abbau aller Restladungen auf der Karte gelangen würde.

Wenn der Benutzer mit Hilfe des Tastenfelds 8 Informationen von der Karte abgefragt hat und die Karte danach ausgeschaltet worden ist, so ist sie infolge des Schritts S7 unmittelbar anschließend wieder in der Lage, eine Zahlung an das automatische Gebührenerfassungssystem abzuwickeln, egal, wie kurz die Unterbrechung des Versorgungsstroms gedauert hat.

Wenn die gleiche Karte zum Wiederaufladen in einen Bankautomaten eingeführt wird, empfängt sie von diesem nach dem Einschalten des Versorgungsstroms zunächst einen Resetbefehl und führt die Schritte *S1* bis *S*4 genauso wie im obenbeschriebenen Fall aus. In Schritt S5 untersucht der Bankautomat die Anmeldung der Karte auf die aktuell eingestellten Kommunikationsparameter hin. Da Bankautomat und Chipkarte verschiedene Protokolle verwenden wollen, sendet der Bankautomat daraufhin erneut einen Resetbefehl an die Chipkarte, die daraufhin zu Schritt S1 zurückkehrt. In Schritt S2 erkennt die Prozessoreinheit der Chipkarte, daß der Inhalt des Flags 1 ist, daß also der gegenwärtige Resetbefehl nicht der erste seit dem Einschalten des Versorgungsstroms ist. Daraufhin verzweigt sie zu Schritt S8, in dem ein langsameres Protokoll initialisiert wird, welches auch von dem Bankautomaten verstanden wird. In Schritt S9 wird daraufhin das Guthaben auf der Chipkarte aufgewertet. Im Anschluß an Schritt 9 wird der Versorgungsstrom ausgeschaltet, und der Benutzer kann die Chipkarte aus dem Bankautomaten entnehmen. Dabei ist es nicht notwendig, daß der Bankautomat einen Befehl zum Rücksetzen des Flags auf 0 an die Chipkarte schickt, da zwischen dem Entnehmen der Karte aus dem Bankautomaten und dem Einführen in ein beliebiges anderes Schreib-Lesegerät in aller Regel mehr als 1,5 Sekunden verstreichen werden, so daß das Flag den Ausschaltzustand 0 auch ohne diesbezüglichen Befehl wieder erreicht.

Die erfindungsgemäße Karte ist deshalb voll kompatibel mit existierenden Bankautomaten und anderen Schreib-Lesegeräten, die dasjenige Kommunikationsprotokoll anwenden, das von der Chipkarte nach wenigstens zweimaligem Empfang eines Resetbefehls initialisiert wird. Zusätzlich ist die Karte aber auch in der Lage, unter Anwendung eines anderen, schnelleren Protokolls zu kommunizieren, das im vorliegenden Beispiel besonders an die Anwendung in einem automatischen Gebührenerfassungssystem angepaßt ist.

Die erfindungsgemäße Chipkarte eignet sich allgemein zur Anwendung bei elektronischen Zahlungssystemen, bei denen eine Vielzahl von Zahlungsvorgängen mit hoher Sicherheit in kürzester Zeit abgewikkelt werden muß, zum Beispiel auch zur Fahrpreisentrichtung an Sperrenanlagen öffentlicher Verkehrsmittel wie etwa S- und U-Bahnen.

## Patentansprüche

1. Chipkarte (1) mit einer Prozessoreinheit (2), einem Ein-Ausgabeanschluss für die Kommunikation mit einem Schreib-Lesegerät (6), einem Eingang für einen Resetbefehl, einem Anschluss für einen Versorgungsstrom, einem flüchtigen Speicher (3), der durch Unterbrechen des Versorgungsstroms in einen Ausschaltzustand versetzbar ist,
wobei die Prozessoreinheit (2) dazu eingerichtet ist, nach Empfang eines Resetbefehls entweder eine erste Initialisierungsprozedur auszuführen, wenn der flüchtige Speicher (3) zum Zeitpunkt des Resetbefehls in dem Ausschaltzustand ist, oder eine von der ersten Initialisierungsprozedur verschiedene zweite Initialisierungsprozedur auszuführen, wenn der flüchtige Speicher (3) nicht im Ausschaltzustand ist,
und wobei im Verlauf der ersten Initialisierungsprozedur der flüchtige Speicher (3) in einem vom Ausschaltzustand verschiedenen Zustand versetzbar ist, **dadurch gekennzeichnet, daß** die Prozessoreinheit (2) eingerichtet ist, um einen Befehl zum Versetzen des flüchtigen Speichers in den Ausschaltzustand von dem Schreib-Lesegerät (6) zu empfangen und auszuführen, bevor der Versorgungsstrom der Chipkarte ausgeschaltet wird, so dass unabhängig von der Zeitdauer der Abschaltung des Versorgungsstroms sichergestellt ist, dass sich nach dem nächsten Einschalten der flüchtige Speicher zum Zeitpunkt des Resetbefehls im Ausschaltzustand befindet.

2. Chipkarte nach Anspruch 1, **dadurch gekennzeichnet, daß** sie eingerichtet ist, um insgesamt zwei verschiedene Initialisierungsprozeduren auszuführen, die unterschiedliche Kommunikationsmodi mit dem Schreib-Lesegerät (6) einstellen.

3. Chipkarte nach Anspruch 2, **dadurch gekennzeichnet, daß** die erste Initialisierungsprozedur einen schnelleren Kommunikationsmodus einstellt als die zweite.

4. Schreib-Lesegerät (6) zur Kommunikation mit einer Chipkarte (1) nach einem der vorhergehenden Ansprüche, mit einer Einrichtung (7) zum Ein- und Ausschalten eines Versorgungsstroms für die Chipkarte, **dadurch gekennzeichnet, daß** das Schreib-Lesegerät (6) eingerichtet ist, den Befehl zum Versetzen des flüchtigen Speichers (3) in den Ausschaltzustand zu senden, bevor die Einrichtung (7) den Versorgungsstrom der Chipkarte (1) ausschaltet.

5. Schreib-Lesegerät nach Anspruch 4, **dadurch gekennzeichnet, daß** es in einem Fahrzeug montiert ist und eine Funkschnittstelle (10) zum Austausch von Daten zwischen der Karte (1) und einer ortsfesten Station umfaßt.

6. Verwendung einer Chipkarte nach einem der Ansprüche 1 bis 3 oder eines Schreib-Lesegerätes nach Anspruch 4 oder 5 in einem System zur automatischen Gebührenentrichtung.

7. Verfahren zum Betreiben einer Chipkarte mit einem flüchtigen Speicher, der durch Unterbrechen der Stromversorgung in einen Ausschaltzustand versetzbar ist, mit den Schritten Versorgungsstrom der Chipkarte einschalten;
Senden eines Resetbefehls an die Karte. (S1);
wenn der flüchtige Speicher im Ausschaltzustand ist:
Ausführen einer ersten Initialisierungsprozedur der Karte (S4) und Versetzen des flüchtigen Speichers in einen vom Ausschaltzustand verschiedenen Zustand (S3), andernfalls Ausführen einer anderen Initialisierungsprozedur der Karte (S8);
Austausch von Daten zwischen der Karte und einem Schreib-Lesegerät (S6); (S9);
Senden eines Befehls zum Versetzen des flüchtigen Speichers in den Ausschaltzustand an die Karte (S7);
Versorgungsstrom der Chipkarte ausschalten.

## Claims

1. Chip card (1) having a processor unit (2), an input/output connection for communication with a read/write unit (6), an input for a reset command, a connection for a supply current, a volatile memory (3) which can be put into a turned-off state by interrupting the supply current, where the processor unit (2) is set up so that, following receipt of a reset command, it either executes a first initialization procedure, if the volatile memory (3) is in the turned-off state at the time of the reset command, or executes a second initialization procedure, which is different from the first initialization procedure, if the volatile memory (3) is not in the turned-off state, and where, in the course of the first initialization procedure, the volatile memory (3) can be put into a state which is different from the turned-off state, **characterized in that** the processor unit (2) is set up to receive, from the read/write unit (6), and execute a command for putting the volatile memory into the turned-off state before the chip card's supply current is turned off, so that, irrespective of the time for which the supply current is disconnected, the volatile memory is certain to be in the turned-off state at the time of the reset command when the supply current has next been turned on.

2. Chip card according to Claim 1, **characterized in that** it is set up to execute a total of two different initialization procedures which set different modes of communication with the read/write unit (6).

3. Chip card according to Claim 2, **characterized in that** the first initialization procedure sets a faster mode of communication than the second one.

4. Read/write unit (6) for communicating with a chip card (1) according to one of the preceding claims, having a device (7) for turning a supply current for the chip card on and off, **characterized in that** the read/write unit (6) is set up to send the command for putting the volatile memory (3) into the turned-off state before the device (7) turns off the supply current for the chip card (1).

5. Read/write unit according to Claim 4, **characterized in that** it is installed in a vehicle and comprises a radio interface (10) for interchanging data between the card (1) and a fixed station.

6. Use of a chip card according to one of Claims 1 to 3 or of a read/write unit according to Claim 4 or 5 in a system for automatic charge payment.

7. Method for operating a chip card having a volatile memory which can be put into a turned-off state by interrupting the power supply, having the steps of turning on the chip card's supply current;
sending a reset command to the card (S1);
if the volatile memory is in the turned-off state:
executing a first initialization procedure for the card (S4) and putting the volatile memory into a state (S3) which is different from the turned-off state, otherwise
executing another initialization procedure for the card (S8);
interchanging data between the card and a read/write unit (S6); (S9);
sending a command for putting the volatile memory into the turned-off state to the card (S7);
turning off the chip card's supply current.

## Revendications

1. Carte à puce (1), comprenant un processeur (2), un raccordement d'entrée-sortie pour la communication avec un appareil d'écriture-lecture (6), une entrée pour un ordre de retour à l'état initial, un raccordement pour un courant d'alimentation, une mémoire vive (3), qui par coupure du courant d'alimentation peut être amenée en état de hors service étant précisé que le processeur (2) est conçu pour procéder, quand il reçoit un ordre de retour à l'état initial, soit à une première initialisation si la mémoire vive (3) se trouve hors service au moment où est arrivé l'ordre, soit à une seconde initialisation différente de la première si la mémoire vive (3) n'est pas hors service, cette mémoire étant, au cours de la première initialisation amenée dans un état différent du hors service,
**caractérisée en ce que**
le processeur (2) est conçu pour recevoir de l'appareil d'écriture-lecture (6) et exécuter un ordre de passage de la mémoire vive à l'état de hors service, avant que le courant d'alimentation de la carte soit coupé, de sorte qu'indépendamment de la durée de la coupure du courant d'alimentation, il est certain qu'après la connexion suivante la mémoire vive se trouve hors service au moment où est émis l'ordre de retour à l'état initial.

2. Carte à puce selon la revendication 1,
**caractérisée en ce qu'**
elle est conçue pour exécuter deux procédures différentes d'initialisation, établissant deux modes différents de communication avec l'appareil d'écriture-lecture.

3. Carte à puce selon la revendication 2,
**caractérisée en ce que**
la première procédure d'initialisation établit un mode de communication plus rapide que celui qu'établit la seconde procédure.

4. Appareil d'écriture-lecture (6) pour communiquer avec une carte à puce (1) selon l'une quelconque des revendications précédentes, comprenant un dispositif (7) de connexion ou de coupure d'un courant d'alimentation de la carte à puce,
**caractérisé en ce que**
l'appareil d'écriture-lecture (6) est conçu pour adresser l'ordre de passage de la mémoire vive (3) à l'état de hors service avant que le dispositif (7) coupe le courant d'alimentation de la carte (1).

5. Appareil d'écriture-lecture selon la revendication 4,
**caractérisé en ce qu'**
il est monté dans un véhicule automobile et il comprend une interface radio (10) pour échanger des données entre la carte (1) et une station fixe.

6. Utilisation d'une carte à puce selon l'une quelconque des revendications 1 à 3, ainsi que d'un appareil d'écriture-lecture selon la revendication 4 ou 5, dans un système de prélèvement automatique de taxes.

7. Procédé pour faire fonctionner une carte à puce équipée d'une mémoire vive et qui peut, par interruption du courant d'alimentation, mettre hors service cette mémoire, selon les étapes suivantes :
- mise en service de l'alimentation de la carte,
- envoi à la carte un ordre de retour à l'état initial (S1),
- quand la mémoire vive est hors service :
exécution d'une première procédure d'initialisation de la carte (S4) et faire passer la mémoire vive dans un état différent de l'état hors service (S3), ou sinon
- exécution d'une autre procédure d'initialisation de la carte (S8) ;
- échange de données entre la carte et un appareil d'écriture-lecture (S6) ; (S9),
- envoi d'un ordre pour faire passer la mémoire vive à l'état de hors service sur la carte (S7) ;
- coupure du courant d'alimentation de la carte.
